# EUROPEAN PATENT SPECIFICATION

(11) **EP 2 920 393 B1**
(45) Date of publication and mention of the grant of the patent: **26.04.2017**
(21) Application number: 13812126.4
(22) Date of filing: 15.10.2013
(51) Int. Cl.: E06B 3/66, E06B 3/54, E06B 3/46, E04B 2/74

(54) **MULTILAYER PANEL FOR PARTITION WALLS**
MEHRSCHICHTPLATTE FÜR TRENNWÄNDE
PANNEAU MULTICOUCHE POUR PAROIS DE SÉPARATION

(30) Priority: 15.10.2012 IT VI20120268
(43) Date of publication of application: 23.09.2015
(73) Proprietor: GPR interni s.r.l. in liquidazione, 35030 Rubano (PD) (IT)
(72) Inventor: GRANDI, Ruggero, 36050 Quinto Vicentino (/VI) (IT)
(74) Representative: Maroscia, Antonio
(86) International application number: PCT/IB2013/059364
(87) International publication number: WO 2014/060945

(56) References cited:
- EP-A1- 1 609 591
- DE-A1-102012 202 691

## Description

### Field of the invention

The present invention generally finds application in the civil or industrial building industry and particularly relates to a multilayer panel for partition walls defining protected work spaces.

### Background art

Partition walls are known to be used in premises, particularly commercial premises or offices, for dividing them into multiple isolated spaces.

Glass walls are particularly known to be used to separate environments from one another and/or from common passage or use spaces, such as passageways or other free access areas.

Therefore, these walls are required to provide adequate isolation, and particularly sound insulation, to create protected and comfortable work conditions in each space defined thereby.

Furthermore, glass walls are widely used in the environments with high aesthetic and design requirements, as they provide clean forms and bright work spaces.

Also, in this particular application the need is particularly felt for glass walls that minimize the use of structural components, particularly metal sections required for fixation of glass walls to the floor or the ceiling for door mounting.

Typically, the glazing panels that are typically used in partitions are composed of a pair of overlapping glass panes having edges overlapping in very accurate aligned relationship, with a sound-absorbing and insulating film as thick as a few tenths of a millimeter, generally from 0.7 mm to 0.8 mm, therebetween. The panes typically have a thickness of the order of about 6 mm to obtain panels having overall thicknesses ranging from 12 mm to 13 mm.

Thus, the finishing members and the sections for door fixation overlap the outer surface of the glazing panel and project out of it, thereby creating a discontinuity with respect to the plane of the glass wall, and considerably affecting the aesthetic value and clean forms that would be perceived by a viewer that looks at substantially smooth and ridge-free walls.

Furthermore, this particular application of the structural elements further reduces the sound insulation level afforded by the panel, which is already limited to a relatively low maximum nominal value of less than 40 dB due to the double glazing configuration. Therefore, when the panel is used in a wall system that comprises sections, junctions and doors, the nominal sound insulation level is reduced by at least 4-5 more dB, due to losses incurred at the sections, seals and doors.

EP1609591 discloses a multilayer panel that has all the technical features of the preamble of claim 1. Nevertheless, this multilayer panel does not allow structural elements to be secured thereto substantially coplanar to the outer transparent panes.

### Disclosure of the invention

The object of the present invention is to overcome the above drawbacks, by providing a multilayer panel for partition walls that is highly efficient and relatively cost-effective.

A particular object is to provide a multilayer panel for partition walls that allows structural elements to be attached thereto in a substantially coplanar position, to achieve a highly aesthetic and clean-form design, as perceived by a viewer.

A further object is to provide a multilayer panel for partition walls that has relatively high sound absorption levels.

Another important object of the invention is to provide a multilayer panel for partition walls that has little or substantially no deflection to be used in sliding door applications.

These and other objects as better explained hereafter, are fulfilled by a multilayer panel for partition walls as defined in claim 1.

Advantageous embodiments of the invention are defined in accordance with the dependent claims.

### Brief description of the drawings

Further features and advantages of the invention will become more apparent upon reading of the detailed description of a few preferred, non-exclusive embodiments of a multilayer panel for partition walls of the invention, which are described as non-limiting examples with the help with the accompanying drawings in which:
FIG. 1 is a top view of a multilayer panel for glass walls of the invention according to a first configuration;
FIG. 2 is a top view of a detail of FIG. 1;
FIG. 3 is a top view of a multilayer panel of the invention according to a second configuration;
FIG. 4 is a top view of a multilayer panel of the invention according to a third configuration.

### Detailed description of a preferred embodiment

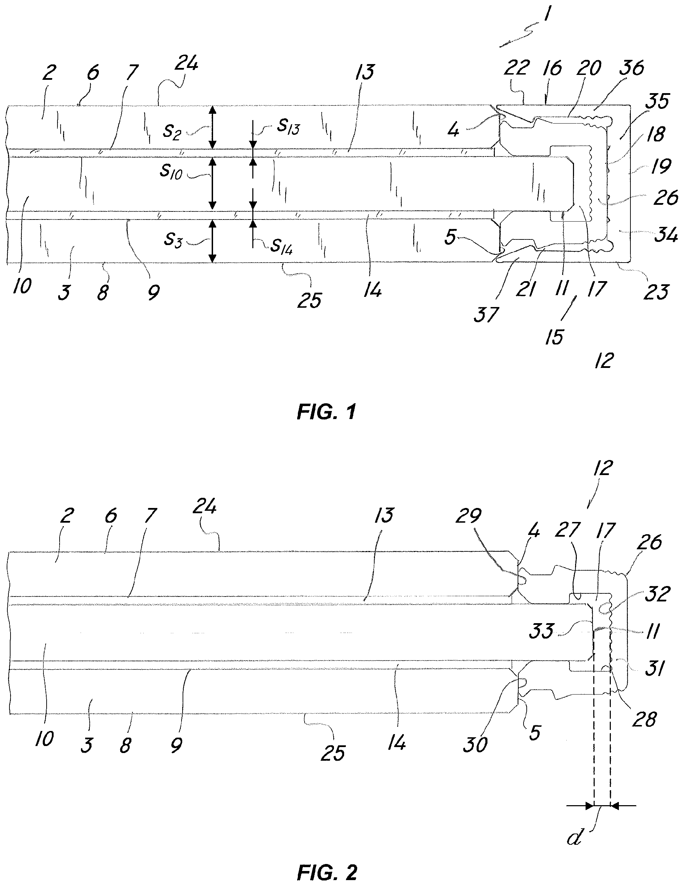

Particularly referring to Fig. 1, there is shown a first preferred, non-exclusive configuration of a multilayer panel for partition walls that are designed to divide premises into a plurality of spaces, generally for commercial or office use.

The multilayer panel, generally designated by numeral 1, is adapted to be attached to a stationary support structure of a room by appropriate fastening means that can be integrated in the panel and are not shown, as they are known per se.

The panel 1 basically comprises a first pane 2 and a second pane 3, both made of an optically transparent or translucent material, e.g. glass, appropriately treated to improve its mechanical properties.

Alternatively, the optically transparent or translucent material may be of a different type, e.g. other than glass, such as a polymer material, having the same strength and suitable to make partition walls.

Each of the panes 2, 3 has a pair of longitudinal edges, one of them being only visible in the annexed figures, and referenced 4 and 5, and a pair of transverse edges 6, 7; 8, 9.

The first pane 2 and the second pane 3 are in mutually overlapping and facing relationship, with at least one of their respective longitudinal edges 4, 5 substantially aligned to and coplanar with each other.

In a peculiar feature of the invention, the multilayer panel 1 comprises a third pane 10 of an optically transparent material interposed between the two panes 2, 3, and having at least one end portion 11 that projects out of the aligned longitudinal edges 4, 5 of such panes 2, 3.

Particularly, Figs. 1 to 3 show a single transverse end 12 of a multilayer panel 1 of the invention comprising first 2 and second 3 panes of identical thicknesses S₂, S₃ and a third pane 10 having a greater thickness S₁₀ than the first 2 and third 3 panes.

Conveniently, the panel 1 may comprise at least one first 13 and one second 14 sound absorbing films 14, which are interposed between the opposite faces of the third pane 10 and the first 2 and second 3 panes respectively, to define a minimum sound insulation level of substantially about 40 dB.

The first 13 and second 14 films may have thicknesses S₁₃, S₁₄ typically ranging from 0.5 mm to 1 mm, preferably of about 0.75 mm.

Furthermore, the first 13 and second 14 films may be substantially optically transparent, with a degree of transparency similar to or higher than that of the panes 2, 3, 10.

The minimum sound insulation level of the panel 1 may be adapted to the thicknesses S₂, S₁, S₁₀ of the first 2, second 3, and third 10 panes respectively, and to the thicknesses S₁₃, S₁₄ of the first 13 and second 14 films.

For instance, a multilayer panel 1 providing a sound insulation level of about 44 dB may be obtained using a third glass pane 10 with a thickness S₁₀ of about 5 mm, first 2 and second 3 glass panes with thicknesses S₂, S₃ of about 4 mm and first 13 and second 14 films with thicknesses S₁₃, S₁₄ of about 0.75 mm.

The panel 1 comprises a substantially elongate hollow finishing member 15 which is coupled to the transverse end portion 11 of the third pane 10 to define a finishing edge 16.

The finishing member 15 may be formed using an extruded section, and may be as long as to cover the transverse end portion 11 of the third pane 10 along its entire longitudinal extent or a part of it.

The finishing member 15, as best shown in Fig. 1, comprises a cavity 17 having a predetermined size, for the transverse end portion 11 to entirely fit therein.

Conveniently, the finishing member 15 may have a substantially C-shaped cross section, with an outer longitudinal wall 18 having a substantially flat outer front surface 19, orthogonal to the plates 2, 3, 10.

Furthermore, the finishing member 15 may have a pair of outer transverse walls 20, 21, having outer side surfaces 22, 23 substantially coplanar with respective outer faces 24, 25 of the first pane 2 and second pane 3.

The coplanarity of the side surfaces 22, 23 of the finishing member 15 with the outer faces 24, 25 of the first pane 2 and second pane 3 provides substantially smooth panels 1, that have no protrusion at the areas in which the finishing section 15 is mounted.

The use of such panels is particularly advantageous when glass walls are required which have high aesthetic value and are capable of presenting the viewer with clean forms.

Conveniently, the finishing member 15 may have an inner interface section 26 with a substantially C-shaped cross section, which is designed for interference fit with the end portion 11 of the third pane 10.

The interface section 26 may be stably fixed to the end cross section 11 to increase the mechanical strength of the finishing member 15 and ensure a high degree of water resistance between corresponding outer faces 24, 25 of the first 2 and second 3 panes.

The interface section 26, as best shown in Fig. 2, may have substantially parallel side tabs 27, 28, each having a free front edge 29, 30 defining respective abutment surfaces for respective longitudinal edges 4, 5 of the first 2 and second 3 panes.

Conveniently, the side tabs 27, 28 of the interface section 28 may be joined by a longitudinal wall 31 whose inner surface 32 is located at a predetermined distance from the longitudinal end edge 33 of the projecting transverse portion 11 to protect it from any shock or impact on the finishing edge 16.

The finishing member 15 may also comprise an outer section 34, as shown in Figs. 1, 3, 4, having a substantially C shape, with an outer longitudinal wall 35 and outer transverse walls 36, 37. The outer section 34 is adapted to overlap the inner interface section 26 for removable snap-fit engagement therewith, to entirely contain it.

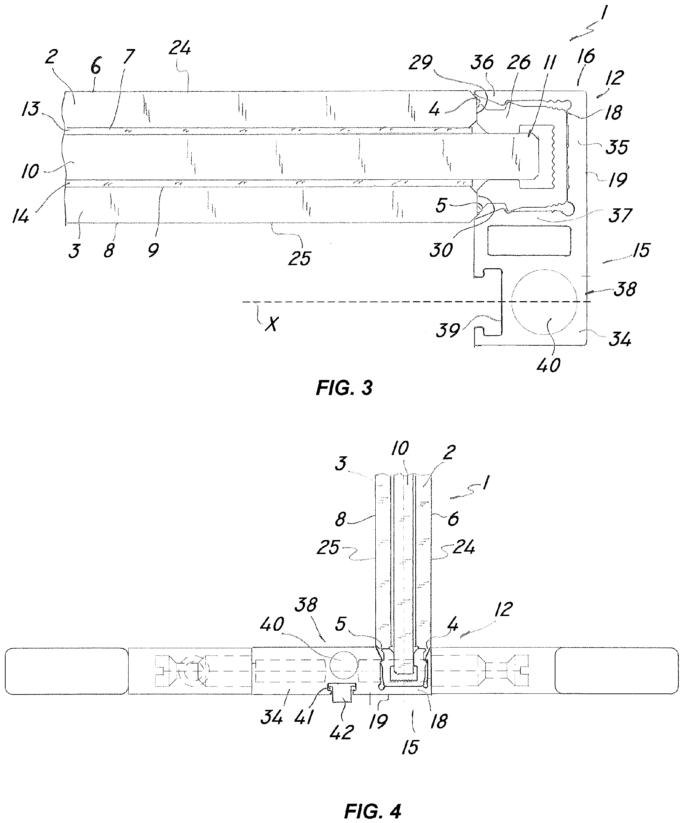

Fig. 3 shows a further configuration of the panel 1 of the invention that essentially differs from the previous configuration in the shape of the finishing member 15.

In this case, the finishing member has an inner section 26 which is coupled, preferably in removable fashion, to an outer section 34 having a longitudinal projection 38 extending out of one of the first 2 and second 3 panes, substantially orthogonal thereto.

Particularly, the longitudinal projection 38 may comprise a longitudinal abutment surface 39 substantially opposite to the outer longitudinal wall 35 to act as an abutment for a panel or a sliding door in a sliding direction X substantially orthogonal to the longitudinal edges 4, 5 of the first 2 and second 3 panes.

The longitudinal projection 38 may also have a longitudinal through channel 40 extending throughout its length, and adapted to allow the passage of tensioning means, not shown, for adjusting the tension of the panes 2, 3, 10.

The tensioning means may consist of a tension bar, which is adapted to be introduced into the channel 40 to adjust and control the deflection of the panes 2, 3, 10 and allow accurate application of a sliding door.

Fig. 4 shows a further configuration of the panel 1 of the invention, which differs from the second configuration essentially in that the longitudinal projection 38 of the outer section 36 comprises a seat 41 for housing a handle 42 or a similar accessory.

In a further aspect, the invention relates to an assembly for making partition walls for space partitioning comprising at least one semifinished wall composed of such three panes 2, 3, 10 and a plurality of finishing members 15 having one or more of the above described configurations.

Particularly, two or more of such finishing members 15 may share the same inner profile 26, allowing the latter to be selectively coupled to any one of the three different outer sections 36 as described above, or further appropriately designed outer sections, such that the panel 1 may be configured in response to special requirements, or that an existing installed panel may be converted to a new function, thereby providing a reconfigurable, highly modular assembly.

The above disclosure clearly shows that the panel of the invention fulfills its intended objects and particularly meets the requirement of providing a multilayer panel for partition walls having a high aesthetic value and a considerable versatility of use.

The multilayer panel of the invention is susceptible of a number of changes and variants, within the scope of the present invention, as defined by the appended claims. All the details thereof may be replaced by other technically equivalent parts, and the materials may vary depending on different needs, without departure from the scope of the invention.

## Claims

1. A multilayer panel for partition walls, comprising:
- one first pane (2) and one second pane (3) of an optically transparent material, each pane having longitudinal edges (4; 5) and transverse edges (6, 7; 8, 9), said first pane (2) and said second pane (3) being in mutually facing relationship with at least said longitudinal edges (4; 5) substantially aligned;
- a third pane (10) of an optical transparent material interposed between said first pane (2) and said second pane (3);
- at least one first (13) and one second (14) sound absorbing films interposed between said first pane (2) and said second pane (3), and respective opposite faces of said third pane (10),
- a finishing member (15) comprising a hollow section, wherein said third pane (10) has at least one end portion (11) that projects out of said aligned longitudinal edges (4; 5) of said first pane (2) and said second pane (3), and defining an anchoring portion for said finishing member (15)
**characterized in that** said finishing member (15) is coupled to said end portion (11) of said third pane (10) to define a peripheral finishing edge (16) at least partially coplanar with at least one of the outer faces (24; 25) of at least one of said first and second panes (2; 3).

2. Panel as claimed in claim 1, **characterized in that** said first (13) and second (14) sound absorbing films are adapted to define a minimum sound insulation level of about 40 dB.

3. Panel as claimed in claim 1, **characterized in that** said finishing member (15) has a substantially C-shaped cross section with an outer longitudinal wall (18) having a substantially flat front surface (19) orthogonal to said panes (2, 3, 10) and at least one pair of side surfaces (22, 23) substantially coplanar with respective outer faces (24; 25) of said first pane (2) and said second pane (3).

4. Panel as claimed in claim 3, **characterized in that** said finishing member (15) comprises an interface profile (26) with a substantially C-shaped cross section with side tabs (27, 28) adapted for interference fit with said projecting end portion (11) of said third pane (3).

5. Panel as claimed in claim 4, **characterized in that** said side tabs (27, 28) have free edges (29, 30) that define abutment surfaces for respective longitudinal edges (4; 5) of said first pane (2) and said second pane (3).

6. Panel as claimed in claim 5, **characterized in that** said finishing member (15) comprises an outer profile (34) with a substantially C-shaped cross section which is adapted to overlap said interface profile (26) for removable snap-fit therewith, to entirely contain it.

7. Panel as claimed in claim 6, **characterized in that** said outer profile (34) comprises a longitudinal projection (38) extending out of one of said first pane (2) and said second pane (3), substantially orthogonal thereto.

8. Panel as claimed in claim 7, **characterized in that** said longitudinal projection (38) has a longitudinal through channel (40) allowing the passage of tensioning means for adjusting the tension of said panes (2, 3, 10).

9. Panel as claimed in claim 8, **characterized in that** said longitudinal projection (38) comprises a seat (41) for housing a handle (42) or a similar accessory.

## Patentansprüche

1. Eine Mehrschichtplatte für Trennwände mit:
- einer ersten Schicht (2) und einer zweiten Schicht (3) aus einem optisch durchsichtigen Material, wobei jede Schicht longitudinale Kanten (4, 5) und transversale Kanten (6, 7, 8, 9) aufweist und die erste Schicht (2) und die zweite Schicht (3) in einem gegenseitig gegenüber liegenden Verhältnis sind mit mindestens den im Wesentlichen in eine Linie gebrachten longitudinalen Kanten (4, 5),
- einer dritten Schicht (10) aus einem optisch durchsichtigen Material, die zwischen der ersten Schicht (2) und der zweiten Schicht (3) angeordnet ist,
- mindestens einer ersten (13) und einer zweiten (14) schallabsorbierenden Folien, die zwischen der ersten Schicht (2) und der zweiten Schicht (3) angeordnet sind, und jeweils gegenüber liegenden Seiten der dritten Schicht (10),
- einem Abschlusselement (15) mit einem hohlen Bereich, wobei die dritte Schicht (10) mindestens einen Endabschnitt (11) aufweist, der aus den in eine Linie gebrachten longitudinalen Kanten (4, 5) der ersten Schicht (2) und der zweiten Schicht (3) heraus ragt und einen Abschnitt bildet für die Verankerung des Abschlusselements (15),
**dadurch gekennzeichnet, dass** das Abschlusselement (15) angeschlossen ist an den Endabschnitt (11) der dritten Schicht (10), um eine äußere Abschlusskante (16) zu bilden, die zumindest teilweise koplanar ist mit mindestens einer der äußeren Seiten (24, 25) von mindestens einer der ersten und zweiten Schichten (2, 3).

2. Platte gemäß Anspruch 1, **dadurch gekennzeichnet, dass** die ersten (13) und zweiten (14) schallabsorbierenden Folien so ausgelegt sind, dass ein minimales Niveau an Schallisolation von ungefähr 40 dB gebildet wird.

3. Platte gemäß Anspruch 1, **dadurch gekennzeichnet, dass** das Abschlusselement (15) einen im Wesentlichen C-förmigen Querschnitt aufweist mit einer äußeren longitudinalen Wand (18) mit einer im Wesentlichen flachen Vorderseite (19), die rechtwinklig ist zu den Schichten (2, 3, 10) und mit mindestens einem Paar Seitenflächen (22, 23), die im Wesentlichen koplanar sind mit jeweils äußeren Seiten (24, 25) der ersten Schicht (2) und der zweiten Schicht (3).

4. Platte gemäß Anspruch 3, **dadurch gekennzeichnet, dass** das Abschlusselement (15) ein Anschlussprofil (26) mit einem im Wesentlichen C-förmigen Querschnitt mit Seitenstreifen (27, 28) aufweist, die ausgebildet sind zum Eingriff mit dem heraus ragenden Endabschnitt (11) der dritten Schicht (3).

5. Platte gemäß Anspruch 4, **dadurch gekennzeichnet, dass** die Seitenstreifen (27, 28) freie Kanten (29, 30) aufweisen, die Anschlagsflächen bilden für jeweilige longitudinale Kanten (4, 5) der ersten Schicht (2) und der zweiten Schicht (3).

6. Platte gemäß Anspruch 5, **dadurch gekennzeichnet, dass** das Abschlusselement (15) ein äußeres Profil (34) mit einem im Wesentlichen C-förmigen Querschnitt aufweist, das ausgelegt ist, um über dem Anschlussprofil (26) zu liegen für eine lösbare Schnappverbindung damit, um es vollständig zu umschließen.

7. Platte gemäß Anspruch 6, **dadurch gekennzeichnet, dass** das äußere Profil (34) einen longitudinalen Vorsprung (38) umfasst, der sich aus einer der ersten Schicht (2) und der zweiten Schicht (3) im Wesentlichen rechtwinklig dazu erstreckt.

8. Platte gemäß Anspruch 7, **dadurch gekennzeichnet, dass** der longitudinale Vorsprung (38) einen longitudinalen Durchgangskanal (40) aufweist, der den Durchgang von Spanneinrichtungen zum Einstellen der Spannung der Schichten (2, 3, 10) ermöglicht.

9. Platte gemäß Anspruch 8, **dadurch gekennzeichnet, dass** der longitudinale Vorsprung (38) einen Sitz (41) umfasst für die Aufnahme eines Griffs (42) oder eines ähnlichen Zubehörs.

## Revendications

1. Panneau multicouche pour des parois de séparation, comprenant :
- des première (2) et deuxième (3) vitres d'un matériau optiquement transparent, chaque vitre des bords longitudinaux (4 ; 5) et des bords transversaux (6, 7 ; 8, 9), ladite première vitre (2) et ladite deuxième vitre (3) étant en vis-à-vis, avec au moins lesdits bords longitudinaux (4 ; 5) sensiblement alignés ;
- une troisième vitre (10) en un matériau optiquement transparent, interposée entre ladite première vitre (2) et ladite deuxième vitre (3) ;
au moins un premier (13) et un deuxième (14) film insonorisant interposés entre ladite première vitre (2) et ladite deuxième vitre (3), et les faces opposées respectives de ladite troisième vitre (10),
un élément de finition (15) comprenant une section creuse, dans lequel ladite troisième vitre (10) comporte au moins une partie d'extrémité (11) qui fait saillie hors desdits bords longitudinaux alignés (4 ; 5) desdites première (2) et deuxième (3) vitres, et définissant une partie d'ancrage pour ledit élément de finition (15)
**caractérisé en ce que** ledit élément de finition (15) est couplé à ladite partie d'extrémité (11) de ladite troisième vitre (10) de façon à définir un bord de finition périphérique (16) au moins partiellement coplanaire avec au moins l'une des faces externes (24 ; 25) d'au moins l'une desdites première et deuxième vitres (2 ; 3).

2. Panneau selon la revendication 1, **caractérisé en ce que** lesdits premier (13) et deuxième (14) films insonorisants sont aptes à définir un niveau d'insonorisation minimal d'environ 40 dB.

3. Panneau selon la revendication 1, **caractérisé en ce que** ledit élément de finition (15) présente une section transversale sensiblement en C, avec une paroi longitudinale externe (18) ayant une surface avant sensiblement plate (19), orthogonale auxdites vitres (2, 3, 10) et au moins une paire de surfaces latérales (22, 23) sensiblement coplanaires avec des faces externes (24 ; 25) respectives de ladite première (2) et deuxième vitre (3).

4. Panneau selon la revendication 3, **caractérisé en ce que** ledit élément de finition (15) comprend un profil d'interface (26) avec une section transversale sensiblement en C, comportant des ailettes latérales (27, 28) destinées à venir se coupler avec serrage avec ladite partie décrit trinité en saillie (11) de ladite troisième vitre (3).

5. Panneau selon la revendication 4, **caractérisée en ce que** lesdites ailettes latérales (27, 28) ont des bords libres (29,30) qui définissent des surfaces de butée pour des bords longitudinaux respectifs (4 ; 5) de ladite première vitre (2) et de ladite deuxième vitre (3).

6. Panneau selon la revendication 5, **caractérisé en ce que** ledit élément de finition (15) comprend un profil extérieur (34) avec une section transversale sensiblement en C, apte à recouvrir ledit profil d'interface (26) pour s'engager par encliquetage amovible avec celui-ci, de manière à le contenir entièrement.

7. Panneau selon la revendication 6, **caractérisée en ce que** ledit profil extérieur (34) comprend une saillie longitudinale (38) s'étendant hors de l'une desdites première vitre (2) et deuxième vitre (3), de façon sensiblement orthogonale à celles-ci.

8. Panneau selon la revendication 7, **caractérisée en ce que** ladite saillie longitudinale (38) comporte en canal traversant longitudinal (40) permettant le passage de moyens de tension pour ajuster la tension desdites vitres (2, 3, 10).

9. Panneau selon la revendication 8, **caractérisée en ce que** ladite saillie longitudinale (38) comprend un siège (41) pour loger une poignée (42) ou un accessoire analogue.
